# EUROPÄISCHE PATENTSCHRIFT

(11) **EP 0 832 539 B1**
(45) Veröffentlichungstag und Bekanntmachung des Hinweises auf die Patenterteilung: **21.06.2000**
(21) Anmeldenummer: 96912191.2
(22) Anmeldetag: 20.05.1996
(51) Int. Cl.: H04Q 7/18, H04M 15/28

(54) **EMPFANGSGERÄT FÜR DIGITALSIGNALE MIT GEBÜHRENZÄHLER**
DIGITAL SIGNAL RECEIVER WITH CHARGE METERING EQUIPMENT
RECEPTEUR DE SIGNAUX NUMERIQUES A COMPTEUR DE TAXES

(30) Priorität: 15.06.1995 EP 95109283
(43) Veröffentlichungstag der Anmeldung: 01.04.1998
(73) Patentinhaber: Erika Koechler, 8833 Samstagern (CH)
(72) Erfinder: KOECHLER, Helmut, CH-8832 Wollerau (CH); VON BURG, Christoph, CH-8805 Richterswil (CH); LANDERT, Christian, CH-6340 Baar (CH)
(74) Vertreter: Blum, Rudolf Emil Ernst
(86) Internationale Anmeldenummer: IB9600473
(87) Internationale Veröffentlichungsnummer: WO9700584

(56) Entgegenhaltungen:
- EP-A- 0 360 228
- EP-A- 0 538 933
- EP-A- 0 595 354
- EP-A- 0 647 055
- GB-A- 2 154 347
- US-A- 5 025 252
- US-A- 5 398 021
- PATENT ABSTRACTS OF JAPAN vol. 9, no. 126 (E-318), 31.Mai 1985 & JP,A,60 014533 (OKI DENKI KOGYO KK), 25.Januar 1985,

## Beschreibung

### Technisches Gebiet

Die Erfindung betrifft ein Empfangsgerät für per Funk ausgestrahlte Digitalsignale sowie ein Verfahren zum Betrieb eines solchen Geräts gemäss dem Oberbegriff der unabhängigen Ansprüche.

### Beschreibung des Standes der Technik

Geräte dieser Art sind vor allem in Form von Pagern bekannt, können aber auch z.B. ein integraler Bestandteil von Mobiltelefonen sein. Normalerweise sind sie Teil eines Funkrufnetzes, wie es z.B. in EP-A-198 448 beschrieben ist, und dienen zum Empfang von Meldungen oder Informationen verschiedenster Art. Hierzu besitzen sie in der Regel mehrere Anrufadressen, die den Empfang von Daten verschiedener Anbieter oder Dienste ermöglichen. So kann ein Pager z.B. auf einer Adresse Finanzinformationen empfangen und auf einer anderen Adresse den Strassenzustand oder auch individuelle, nur für ihn bestimmte Meldungen. In der Praxis besitzen Pager heute bis zu 16 verschiedene Adressen oder auch mehr und können somit entsprechend verschiedene Dienstmeldungen empfangen und auswerten. Wenn ein Pagerbesitzer einen neuen Dienst empfangen will, muss im Pager die Rufnummer (Adresse) des Dienstes einprogrammiert werden. Dies kann direkt am Pager oder per Funk von der Zentrale durchgeführt werden. Ist der Dienst nicht gebührenfrei, so müssen die zusätzlichen Kosten im Abonnement des Benutzers beim Lieferanten der Information oder dessen Stellvertreter verrechnet werden. Dies führt jedoch zu einem beträchtlichen administrativen und technischen Aufwand und hat für den Pagerbesitzer den Nachteil, dass er mit dem Operator oder dem Dienstanbieter in Kontakt treten muss, um einen neuen Dienst auf seinen Pager aufzuschalten.

In EP 538 933 und EP 360 228 werden Pager beschrieben, in welchen Speicher-Karten eingesetzt werden können. Auf diesen Karten ist ein Kreditzähler abgespeichert. Dieser Zähler wird im Betrieb des Pagers heruntergezählt, bis sich der Kredit erschöpft hat. Damit wird zwar die Kostenabrechnung für den Anbieter vereinfacht, der Endbenutzer muss jedoch nun die Karte regelmässig aufladen oder ersetzen. Auch wird mit einer einzelnen Karte das Problem einer Abrechnung bei Empfang mehrerer Dienste nicht befriedigend gelöst.

In US 5,025,252 wird ein Pager offenbart, bei welchem der Empfang einzelner Dienste über Funk gesperrt werden kann. Dies ist für den Netzbetreiber jedoch mit beträchtlichem administrativem Aufwand verbunden und auch für den Endbenutzer eine unflexible und somit unbefriedigende Lösung.

### Darstellung der Erfindung

Es stellt sich deshalb die Aufgabe, ein Verfahren bzw. ein Empfangsgerät der eingangs genannten Art bereitzustellen, bei dem eine für Anbieter und Anwender einfache Verrechnung der Kosten möglich wird. Diese Aufgabe wird durch die unabhängigen Ansprüche gelöst.

Wie konventionelle Geräte weist also das erfindungsgemässe Empfangsgerät eine Empfangssteuereinheit auf, mit welcher die auszuwertenden und somit dem Benutzer zur Verfügung stehenden Digitalsignale z.B. aufgrund ihrer Adresse erkannt werden. Zusätzlich hierzu ist jedoch ein Gebührenzähler bzw. eine Gebührenermittlungseinheit vorgesehen, welche die Auswahl bzw. Zahl der auszuwertenden Gruppen bzw. Dienste beschränkt. Unter Auswertung sind hierbei die Operationen zu verstehen, die notwendig sind, den Anwender in den Genuss des Signals zu bringen, d.h. insbesondere der Empfang, die Dekodierung, das Abspeichern und die Möglichkeit der Darstellung. Fehlt mindestens einer dieser Schritte, so wird das Signal nicht ausgewertet.

Innerhalb seiner Kreditlimite kann der Benutzer auswählen, welche Dienste bzw. Gruppen er empfangen möchte. Er kann auch gewisse Dienste aus der Auswahl nehmen und durch andere ersetzen, ohne dass er hierzu mit dem Netzbetreiber Kontakt aufnehmen muss. Auch muss der Benutzer nicht um eine Erneuerung seines Kredits besorgt sein.

Der Gebührenzähler kann einen Speicher aufweisen, in welchem eine Gebührenlimite bzw. ein Kredit gespeichert ist, und die bzw. der mit den angefallenen Gebühren verglichen wird. Der Speicher kann mittels geeigneter Massnahmen direkt am Gerät oder vorzugsweise auch per Funk durch autorisierte Personen geändert werden.

Teure Dienste bzw. Gruppen können auch mehrfach gezählt, Gruppen von Gratisdiensten nicht gezählt und Gruppen von Werbediensten negativ gezählt (d. h. als Bonus gutgeschrieben) werden. Es ist auch möglich, für eine oder mehrere Gruppen mit einem Zeitgeber die Zeit zu ermitteln, während der diese Gruppe zur Auswertung ausgewählt ist bzw. sind. Diese Zeit kann zur Ermittlung der angefallenen Gebühr gegebenenfalls mit einer Zeitgebühr multipliziert werden.

Die Erfindung eignet sich insbesondere für Pager, aber auch für andere Geräte, wie z.B. Mobiltelefone, Mobile Data etc.

### Kurze Beschreibung der Figuren

Weitere Vorteile und Anwendungen der Erfindung ergeben sich aus der nun folgenden Beschreibung anhand der Figuren. Dabei zeigen:
Figur 1 ein Blockdiagramm eines erfindungsgemässen Empfangsgeräts und
Figur 2 den Verfahrensablauf bei der Ermittlung der auswählbaren bzw. auszuwertenden Dienste.

### Beschreibung der bevorzugten Ausführungsbeispiele

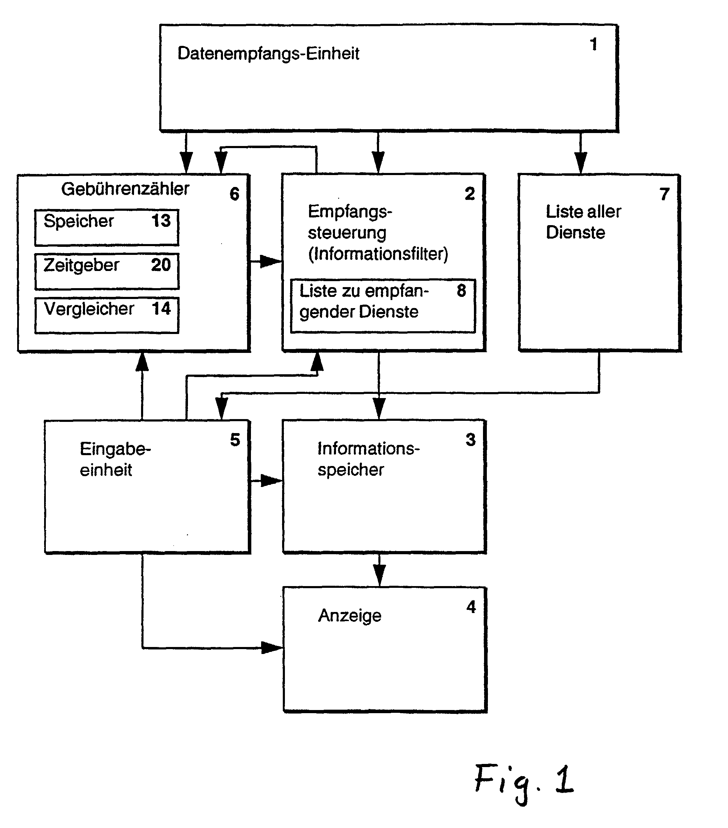

In Figur 1 wird das Blockdiagramm einer möglichen Ausführung des Empfangsgeräts im Form eines Pagers gezeigt. Dieser Pager empfängt Daten eines Funkrufnetzes konventioneller Art, wie es z.B. in EP-A-198 448 beschrieben ist, dessen Offenbarung durch Bezug hier aufgenommen wird. Er umfasst eine Datenempfangs-Einheit 1 mit Radioempfänger und Demodulator bekannter Art, die die Funksignale eines Netzbetreibers empfängt und demoduliert. Die so empfangenen digitalen Daten werden einer Empfangssteuerung 2 zugeleitet, die als Informationsfilter dient. Sie wählt die Daten aus, die gespeichert werden sollen. Dies geschieht zum Beispiel aufgrund von Adressignalen, die jedes Datenpaket begleiten. Dabei weisen alle Datenpakete, die zur gleichen Gruppe, d.h. zum gleichen Dienst gehören, dieselbe Adresse auf. Hierzu umfasst die Empfangssteuerung eine Liste 8 der zum Empfang bzw. zur Auswertung ausgewählten Dienste mit deren Adressen. Die Empfangssteuerung 2 lässt nur die Auswertung jener Signale zu, die einer der in Liste 8 abgespeicherten Dienste angehören.

Die auszuwertenden Daten werden dekodiert und in einem Informationsspeicher 3 abgelegt. Über eine Eingabeeinheit 5 kann der Benutzer bestimmen, welche der im Informationsspeicher 3 gespeicherten Daten in einer Anzeige 4 dargestellt werden sollen. Bei der Anzeige 4 kann es sich z.B. um eine numerische, alphanumerische oder graphische Flüssigkristallanzeige handeln.

Die Eingabeeinheit 5 erlaubt es dem Anwender ausserdem, die Liste 8 zu ändern, d.h. zusätzliche Dienste bzw. Signalgruppen zum Empfang auszuwählen bzw. bereits ausgewählte Dienste durch andere zu ersetzen oder von der Liste 8 zu streichen.

Das Empfangsgerät umfasst ferner eine Gebührenermittlungseinheit bzw. einen Gebührenzähler 6. Dieser Gebührenzähler überwacht, welche Dienste bzw. Gruppen von Daten zur Auswertung ausgewählt sind, und ermittelt einen entsprechenden Gebührenbetrag. Überschreitet dieser Betrag einen bestimmten Wert, so wird die Auswahl weiterer Dienste verhindert oder die weitere Auswertung bereits ausgewählter Dienste blokkiert. Dies wird weiter unten näher beschrieben.

In einem Dienst- bzw. Gruppenspeicher 7 des Empfangsgeräts ist eine Liste der Dienste abgespeichert, die empfangen werden können. Diese Liste umfasst den Namen jedes Dienstes, Angaben zu den Gebühren für dessen Empfang sowie die Adresse, die den Datenpaketen dieses Dienstes zugeordnet ist. Die Liste kann regelmässig per Funk auf den neuesten Stand gebracht werden. Mit Befehlen, die über die Eingabeeinheit 5 eingegeben werden, werden die Namen der Dienste und die Gebühreninformationen auf die Anzeige 4 übertragen. Nun können die gewünschten Dienste ausgewählt und der Empfangssteuerung 2 mitgeteilt werden.

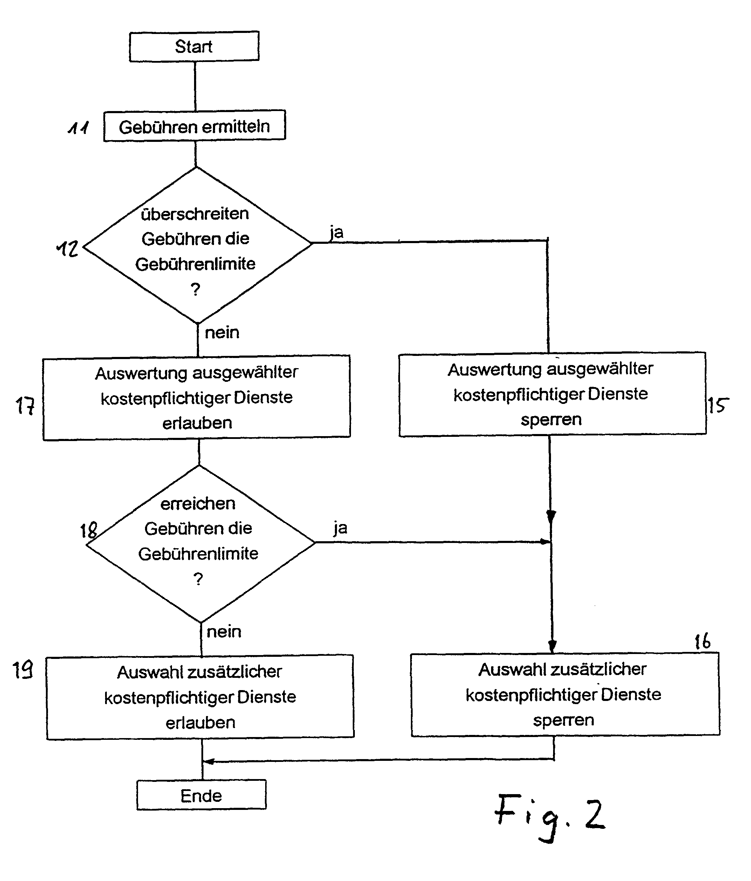

Die Aufgabe des Gebührenzählers 6 liegt wie erwähnt darin, die Gebühren für die vom Benutzer verwendeten Dienste als Gebührenstand zu ermitteln und je nach Resultat dieser Ermittlung festzulegen, ob der Benutzer noch weitere kostenpflichtige Dienste auswählen darf oder ob aufgrund einer Kostenüberschreitung die Auswertung bereits ausgewählter kostenpflichtiger Dienste gesperrt werden muss. Ein möglicher Verfahrensablauf wird in Figur 2 dargestellt.

In einem ersten Schritt 11 werden die Gebühren ermittelt, die aufgrund der jetzigen Einstellung des Empfangsgeräts und gegebenenfalls aufgrund dessen früherer Verwendung anfallen bzw. anfielen. Diese Gebühren werden mit einer Gebührenlimite verglichen. Hierzu ist der Gebührenzähler mit einem Speicher 13 ausgerüstet, der die Gebührenlimite bzw. den noch nicht aufgebrauchten Kredit enthält, sowie mit einem Vergleicher 14, der in Hard- oder Software ausgeführt sein kann.

Zeigt der Vergleich in Schritt 12, dass die Gebührenlimite überschritten bzw. der Kredit überzogen worden ist, so muss in Schritt 15 die Auswertung einiger oder aller der ausgewählten gebührenpflichtigen Dienste und in Schritt 16 die Auswahl zusätzlicher gebührenpflichtiger Dienste gesperrt werden.

Ist die Gebührenlimite nicht überschritten bzw. der Kredit nicht überzogen, so kann in Schritt 17 die Auswertung der zur Zeit ausgewählten Dienste erlaubt werden. Sodann wird in Schritt 18 geprüft, ob die Gebührenlimite gerade erreicht bzw. der Kredit aufgebraucht ist. In diesem Fall muss in Schritt 16 die Auswahl weiterer gebührenpflichtiger Dienste gesperrt werden.

Ist die Gebührenlimite nicht erreicht bzw. der Kredit nicht aufgebraucht, so kann in Schritt 19 auch die Auswahl weiterer gebührenpflichtiger Dienste erlaubt werden.

Zur Ermittlung der Gebühren in Schritt 11 stehen verschiedene Möglichkeiten offen:

In einem einfachsten Verfahren wird lediglich die Zahl der momentan zur Auswertung ausgewählten, gebührenpflichtigen Dienste ermittelt. Diese Zahl entspricht dann der angefallenen Gebühr, und zwar unabhängig von der Zeitdauer, während welcher die einzelnen Dienste ausgewählt sind. Diese Methode kann verbessert werden, indem besonders teure Dienste mehrfach gezählt werden. Andere Dienste (z.B. Werbedienste) können auch nicht gezählt oder sogar negativ gezählt werden, was indirekt zu einer Erhöhung der Gebührenlimite führt. Generell wird also jedem Dienst ein Gebührenwert zugeordnet. Der Gebührenwert kann positiv, negativ oder gleich Null sein. Die Gebührenwerte sind, wie erwähnt, in der Liste 7 abgespeichert. Zur Ermittlung der totalen Gebühr werden die Gebührenwerte aller ausgewählten, d.h. in der Liste 8 eingetragenen Dienste addiert. Die so ermittelte Gebühr wird sodann in Schritt 12 mit der Gebührenlimite verglichen.

Wenn der Gebührenwert positiv oder negativ sein kann, so sollte der Gebührenzähler 6 zur Addition vorzeichenbehafteter Gebührenwerte ausgelegt sein.

In einem anderen Verfahren zur Gebührenermittlung wird das Produkt aus Summe und Zeit der konsumierten Dienste ermittelt. Auch hier können teurere Dienste mehrfach gezählt bzw. gewisse Dienste nicht oder negativ gezählt werden. Zur Ermittlung der Zeit ist der Gebührenzähler mit einem Zeitgeber 20 ausgerüstet. In einer praktischen Ausführung dieses Verfahrens kann in regelmässigen Zeitintervallen (z.B. von einigen Sekunden oder Minuten) die Zahl der momentan ausgewählten Dienste ermittelt und zu einem Zähler hinzu addiert oder von einem Kredit subtrahiert werden. Erreicht der Zähler die Gebührenlimite bzw. geht der Kredit auf null, so wird die Auswertung und/oder Auswahl gebührenpflichtiger Dienste gesperrt. In regelmässigen Zeitabständen von z.B. einer Woche oder einem Monat wird der Kredit z.B. durch Bezahlung der vereinbarten Benutzungsgebühr automatisch wieder auf die Kreditlimite aufgefüllt bzw. der Gebührenzähler auf null gesetzt.

Da die Kosten der empfangenen Dienste lokal auf dem Pager erfasst und überwacht werden, kann der Benutzer jederzeit von sich aus entscheiden, welche Informationen er empfangen will. Will er einen neuen Dienst aufschalten, so braucht er nicht mit dem Dienst- bzw. Netzwerkanbieter in Kontakt zu treten, solange seine Gebührenlimite bzw. sein Kredit zum Empfang dieses Dienstes ausreicht. Reicht sein Kredit nicht aus, so kann er weniger interessante Dienste abschalten. Möchte er nicht auf Dienste verzichten, so kann er mit dem Betreiber ein höheres Limit vereinbaren. In diesem Falle wird die Gebührenlimite bzw. der Kredit erhöht. Dies kann lokal am Pager z.B. über Eingabe eines bestimmten Codes oder per Funk geschehen, wobei in letzerem Fall der Wert des Speichers 13 z.B. durch eine Funkmeldung an eine vorbestimmte Geräteadresse des Empfangsgeräts geändert wird. Der Kredit bzw. die Gebührenlimite kann auch wieder verringert werden.

Der Gebührenzähler kann auch über weitere Funktionen verfügen. So kann er Dienste erkennen, bei denen die Benutzung während einer anfänglichen Probephase gratis ist. Er kann auch Gutschriften für gelesene Werbung eintragen d.h. dem Kredit bzw. der Gebührenlimite gutschreiben.

Die Erfindung eignet sich insbesondere für Pager, d. h. tragbare Funkrufempfänger für digitale Meldungen, kann aber auch an anderen Orten eingesetzt werden, wo gebührenpflichtige digitale Daten per Funk empfangen werden, wie z.B. in Mobiltelefonen mit Pagerfunktionen, in Mobile Data Systemen, usw.

Während soweit bevorzugte Ausführungsbeispiele gezeigt und beschrieben worden sind, muss betont werden, dass die Erfindung nicht auf diese beschränkt ist und im Umfang der folgenden Patentansprüche auch in anderer Weise ausgeführt werden kann.

## Patentansprüche

1. Empfangsgerät für per Funk ausgestrahlte Digitalsignale, wobei die Digitalsignale in Gruppen eingeteilt sind, mit einer Empfangssteuereinheit (2) zur Ermittlung auszuwertender Digitalsignale und mindestens einen Gebührenzähler (6) zum Ermitteln von Gebühren der auszuwertenden Digitalsignale, wobei die Empfangssteuereinheit (2) durch den Gebührenzähler (6) steuerbar ist, dadurch gekennzeichnet, dass mit der Empfangssteuereinheit (2) die Digitalsignale mehrerer Gruppen zur Auswertung auswählbar sind, und dass mit dem Gebührenzähler (6) die Zahl gleichzeitig ausgewählter, gebührenpflichtiger Gruppen ermittelbar und mit einer vorgegebenen Limite vergleichbar ist, wobei die Auswahl zusätzlicher gebührenpflichtiger Gruppen sperrbar ist, wenn die Zahl der ausgewählten gebührenpflichtigen Gruppen die vorgegebene Limite erreicht.

2. Empfangsgerät nach Anspruch 1, gekennzeichnet durch einen Speicher (13) zum Abspeichern der Limite, wobei der Inhalt des Speichers (13) per Funk änderbar ist.

3. Empfangsgerät nach einem der vorangehenden Ansprüche, dadurch gekennzeichnet, dass bereits ausgewählte Gruppen durch andere Gruppen ersetzbar sind oder aus der Auswahl streichbar sind.

4. Empfangsgerät für per Funk ausgestrahlte Digitalsignale verschiedener Dienste mit einer Empfangssteuereinheit (2) zur Ermittlung auszuwertender Digitalsignale und mit einer Gebührenermittlungseinheit, (6),
gekennzeichnet durch Auswahlmittel (5, 8) zur Auswahl mehrerer auszuwertender Dienste, wobei die Gebührenermittlungseinheit ausgestaltet ist, um aufgrund der ausgewählten Dienste eine Gebühr zu ermitteln, und dass zusätzliche kostenpflichtige Dienste nur auswählbar sind, wenn die Gebühr eine Gebührenlimite nicht überschreitet.

5. Empfangsgerät nach Anspruch 4, dadurch gekennzeichnet, dass jedem Dienst eine Dienstgebühr zugeordnet ist, und dass das Empfangsgerät einen Speicher (7) aufweist, zum Speichern einer Liste der Dienste und der jeweiligen Dienstgebühren.

6. Empfangsgerät nach Anspruch 5, dadurch gekennzeichnet, dass die Gebührenermittlungseinheit (6) ausgestaltet ist, um die Gebühr als Summe der Dienstgebühren der jeweilig ausgewählten Dienste zu errechnen.

7. Empfangsgerät nach einem der Ansprüche 5 oder 6, dadurch gekennzeichnet, dass es derart ausgestaltet ist, dass mindestens ein erster Teil der Dienstgebühren Null sein kann.

8. Empfangsgerät nach einem der Ansprüche 5 bis 7, dadurch gekennzeichnet, dass es derart ausgestaltet ist, dass mindestens ein zweiter Teil der Dienstgebühren positiv und ein dritter Teil der Dienstgebühren negativ sein kann.

9. Empfangsgerät nach einem der Ansprüche 5 bis 8, dadurch gekennzeichnet, dass die im Speicher (7) gespeicherte Liste über Funk änderbar ist.

10. Empfangsgerät nach Anspruch 4, dadurch gekennzeichnet, dass die Gebührenermittlungseinheit (6) ausgelegt ist zur Ermittlung der Anzahl ausgewählter gebührenpflichtiger Dienste, und dass die Auswahl weiterer Dienste bei Erreichen einer maximalen Anzahl gesperrt wird.

11. Empfangsgerät nach einem der Ansprüche 4 bis 10, dadurch gekennzeichnet, dass durch die Auswahlmittel (5, 8) bereits ausgewählte Dienste durch andere Dienste ersetzbar oder aus der Auswahl streichbar sind.

12. Pager mit einem Empfangsgerät nach einem der vorangehenden Ansprüche.

13. Verfahren zum Empfang von per Funk ausgestrahlter Digitalsignale verschiedener Dienste mit einem Empfangsgerät, in welchem mindestens ein Dienst auswählbar ist, dessen Digitalsignale auszuwerten sind, wobei das Empfangsgerät einen Gebührenzähler aufweist,
dadurch gekennzeichnet, dass gleichzeitig mehrere Dienste ausgewählt werden und dass im Gebührenzähler eine von den ausgewählten Diensten abhängige Gebühr ermittelt wird, und dass eine zusätzliche Auswahl von Diensten aufgrund der Gebühr limitiert wird.

14. Verfahren nach Anspruch 13, dadurch gekennzeichnet, dass die Gebühr mit einer per Funk änderbaren Gebührenlimite verglichen wird.

## Claims

1. Receiver for digital signals emitted by radio, wherein the digital signals are divided into groups, with a receiver control unit (2) for determining digital signals to be processed and at least one charge counter (6) for determining charges for the digital signals to be processed, wherein the receiver control unit (2) can be controlled by the charge counter (6), characterised in that by means of the receiver control unit (2) the digital signals of several groups can be selected for processing and that by means of the charge counter (6) the number of simultaneously selected groups subject to charges can be determined and compared to a given limit, wherein the selection of additional groups subject to charges can be disabled if the number of selected groups subject to charges reaches the given limit.

2. Receiver of claim 1, characterised by a memory (13) for storing the limit, wherein the contents of the memory (13) can be modified by radio.

3. Receiver of one of the preceding claims characterised in that already selected groups can be replaced by other groups or can be deleted from the selection.

4. Receiver for digital signals of different services emitted by radio with a receiver control unit (2) for determining digital signals to be processed and with a charge determination unit (6),
characterised by selection means (5, 8) for selecting several services to be processed, wherein the charge determination unit is designed for determining a charge based on the selected services and that additional services subject to charges can only be selected if the charge does not exceed a charge limit.

5. Receiver of claim 4, characterised in that a service charge is attributed to each service and that the receiver comprises a memory (7) for storing a list of the services and the corresponding service charges.

6. Receiver of claim 5, characterised in that the charge determination unit (6) is designed to calculate the charge as sum of the service charges of the currently selected services.

7. Receiver of one of the claims 5 or 6, characterised in that it is designed such that at least a first part of the service charges can be zero.

8. Receiver of one of the claims 5 to 7, characterised in that it is designed such that at least a second part of the service charges can be positive and that a third part of the service charges can be negative.

9. Receiver of one of the claims 5 to 8, characterised in that the list stored in the memory (7) can be modified by radio.

10. Receiver of claim 4, characterised in that the charge determination unit (6) is designed for determining the number of selected services subject to charges and that the selection of further services is disabled upon reaching a maximum number.

11. Receiver of one of the claims 4 to 10, characterised in that by means of the selection means (5, 8) already selected services can be replaced by other services or be deleted from the selection.

12. Pager with a receiver of one of the preceding claims.

13. Method for receiving digital signals of different services emitted by radio by means of a receiver in which at least one service whose digital signals are to be processed can be selected, wherein the receiver comprises a charge counter,
characterised in that several services are selected simultaneously and that in the charge counter a charge depending on the selected services is determined and that an additional selection of services is limited based on the charge.

14. Method of claim 15, characterised in that the charge is compared to a charge limit that can be modified by radio.

## Revendications

1. Récepteur pour signaux digitaux émis par radio, ces signaux étant répartis en groupes, avec une unité de commande réceptrice (2) servant à déterminer les signaux digitaux à exploiter et avec au moins un compteur de taxes (6) servant à déterminer les tarifs des signaux digitaux à exploiter, l'unité réceptrice (2) pouvant être commandée par le compteur de taxes (6), caractérisé en ce que les signaux digitaux de plusieurs groupes peuvent être sélectionnés par l'unité réceptrice (2) pour être exploités, et que le nombre de groupes payants sélectionnés simultanément peut être déterminé au moyen du compteur de taxes (6) et comparé à une limite prédéterminée, la sélection de groupes payants additionnels peuvent être bloquée lorsque le nombre des groupes payants sélectionnés atteint la limite prédéterminée.

2. Récepteur selon la revendication 1, caractérisé par une mémoire (13) pour mémoriser ladite limite, le contenu de cette mémoire pouvant être modifiée par radio.

3. Récepteur selon une des revendications précédentes, caractérisé en ce que des groupes déjà sélectionnés peuvent être remplacés par d'autres groupes, ou exclus de la sélection.

4. Récepteur pour les signaux digitaux diffusés par radio par différents services, avec une unité de commande réceptrice (2) servant à déterminer les signaux digitaux à exploiter et avec une unité (6) pour déterminer les taxes, caractérisé en ce qu'il comporte des moyens de sélection (5, 8) pour sélectionner plusieurs services à exploiter, l'unité (6) pour déterminer les taxes étant agencée pour déterminer une taxe en fonction des services sélectionnés, et en ce que des services payants additionnels ne peuvent être sélectionnés que si la taxe n'excède pas une taxe-limite.

5. Récepteur selon la revendication 4, caractérisé en ce qu'une taxe de service est attribuée à chaque service, et que le récepteur comporte une mémoire (7) pour mémoriser une liste des services et des taxes y afférentes.

6. Récepteur selon la revendication 5, caractérisé en ce que l'unité (6) pour déterminer les taxes est agencée pour calculer la taxe par addition des taxes des services sélectionnés.

7. Récepteur selon une des revendications 5 ou 6, caractérisé en ce qu'il est réalisé de façon à ce qu'au moins une première partie des taxes de service puisse être égale à zéro.

8. Récepteur selon une des revendications 5 à 7, caractérisé en ce qu'il est réalisé de façon à ce qu'au moins une seconde partie des taxes de service puisse être positive et une troisième négative.

9. Récepteur selon une des revendications 5 à 8, caractérisé en ce que la liste mémorisée dans la mémoire (7) peut être modifiée par radio.

10. Récepteur selon la revendication 4, caractérisé en ce que l'unité (6) pour déterminer les taxes est agencée pour déterminer le nombre des services payants sélectionnés et que la sélection de services additionnels payants est bloquée lorsque ce nombre atteint une valeur maximale.

11. Récepteur selon une des revendications 4 à 10, caractérisé en ce que des services préalablement sélectionnés par les moyens de sélection (5, 8) peuvent être remplacés par d'autre services ou exclus de la sélection.

12. Pageur comportant un récepteur selon une des revendications précédentes.

13. Procédé pour recevoir avec un récepteur les signaux digitaux de plusieurs services diffusés par radio et sélectionner au moins un service dont les signaux digitaux sont à exploiter, le récepteur étant muni d'un compteur de taxes, caractérisé en ce que plusieurs services sont sélectionnés simultanément, que le compteur de taxes détermine une taxe dépendant des services sélectionnés, et qu'une sélection de services additionnels est limitée en fonction de la taxe.

14. Procédé selon la revendication 13, caractérisé en ce que la taxe est comparée avec une limite de taxe pouvant être modifiée par radio.
